# EUROPÄISCHE PATENTSCHRIFT

(11) **EP 3 950 193 B1**
(45) Veröffentlichungstag und Bekanntmachung des Hinweises auf die Patenterteilung: **03.01.2024**
(21) Anmeldenummer: 21165108.8
(22) Anmeldetag: 26.03.2021
(51) Int. Cl.: B23B 31/107, B23B 31/07, B23B 29/04, B23B 31/00, B23B 29/24, B23B 29/20

(54) **WERKZEUG- ODER WERKSTÜCKAUFNAHME**
TOOL OR WORKPIECE RECEPTACLE
LOGEMENT POUR OUTILS OU PIÈCES

(30) Priorität: 04.08.2020 DE 102020120525
(43) Veröffentlichungstag der Anmeldung: 09.02.2022
(73) Patentinhaber: Ott-Jakob Spanntechnik GmbH, 87663 Lengenwang (DE)
(72) Erfinder: Greif, Josef, 87496 Friesenried (DE); Bechteler, Wolfgang, 87640 Ebenhofen (DE); Rösch, Conrad, 87459 Pfronten (DE); Horn, Maximilian, 87497 Wertach (DE)
(74) Vertreter: Charrier Rapp & Liebau

(56) Entgegenhaltungen:
- DE-A1-102014 102 082
- DE-B- 1 004 889
- DE-U1-202005 006 557

## Beschreibung

Die Erfindung betrifft eine Werkzeug- oder Werkstückaufnahme nach dem Oberbegriff des Patentanspruchs 1.

Aus der DE 10 04 889 B ist eine gattungsgemäße Werkzeugaufnahme bekannt. Dort sind in einem Aufnahmekörper zwei gegeneinander und quer zur Mittelachse einer Aufnahmeöffnung verschiebbare Keilnocken angeordnet. Die Keilnocken sind durch eine als Doppelendschraube ausgebildete Schraube gegeneinander verstellbar. An den beiden Keilnocken sind Spannflächen zum Einziehen eines Werkzeugs über einen Einzugsbolzen vorgesehen. Die beiden Keilnocken weisen auch Ausdruckflächen auf, über welche das Werkzeug beim Auseinanderfahren der beiden Keilnocken ausgestoßen werden kann.

Aus der DE 10 2014 102 082 A1 ist eine als Werkzeugrevolver ausgebildete Werkzeugaufnahme mit einem Aufnahmekörper und einer Spannvorrichtung zum Spannen eines Werkzeugs in einer Aufnahmeöffnung des Aufnahmekörpers bekannt. Dort enthält die Spannvorrichtung zwei durch ein gemeinsames Betätigungselement quer zu einer Mittelachse der Aufnahmeöffnung gegeneinander verschiebbare Spannelemente. Die Spannelemente sind nicht nur gegeneinander, sondern auch in dem Aufnahmekörper verschiebbar, wodurch selbst bei ungenauen Aufnahmen oder Verschmutzungen eine genaue und zentrische Spannung erreicht werden. Unerwünschte Kippbewegungen oder Schrägstellungen der Werkzeuge oder Werkstücke sind vermeidbar. Allerdings werden die Werkzeuge mit einer relativ hohen Kraft in die üblicherweise konischen Aufnahmeöffnungen des Revolverkörpers eingezogen, so dass sich Probleme bei der Werkzeugentnahme ergeben können.

Aufgabe der Erfindung ist es, eine Werkzeug- oder Werkstückaufnahme der eingangs genannten Art zu schaffen, die auch eine vereinfachte Entnahme eines Werkzeugs oder Werkstücks ermöglicht.

Diese Aufgabe wird durch eine Werkzeug- oder Werkstückaufnahme mit den Merkmalen des Anspruchs 1 gelöst. Zweckmäßige Weiterbildungen und vorteilhafte Ausgestaltungen der Erfindung sind in den Unteransprüchen angegeben.

Bei der erfindungsgemäßen Werkzeug- oder Werkstückaufnahme weist die Spannvorrichtung ein in einer Aufnahme eines Aufnahmekörpers quer zu einer Mittelachse einer Aufnahmeöffnung verschiebbares erstes Spannelement und ein mittels eines Bedienelements gegenüber dem ersten Spannelement quer zur Mittelachse der Aufnahmeöffnung verschiebbares zweites Spannelement mit konischen Spannflächen an den beiden Spannelementen zum Einziehen des Werkzeugs oder Werkstücks in die Aufnahmeöffnung auf. An dem ersten Spannelement ist eine Ausdrückeinrichtung zum Ausdrücken des Werkzeugs oder Werkstücks aus der Aufnahmeöffnung bei der Bewegung der Spannelemente in eine Lösestellung vorgesehen. Die Ausdrückeinrichtung weist an der Unterseite des ersten Spannelements angeordnete Ausdrückelemente mit einer konischen oberen Ausdrückfläche auf. Die konische untere Spannfläche des ersten Spannelements ist auf der einen Seite einer Öffnung im ersten Spannelement (20) und die Ausdrückelemente sind auf der gegenüberliegenden anderen Seite der Öffnung am ersten Spannelement angeordnet. Bei der Bewegung der Spannelemente in die Lösestellung wird über die Ausdrückeinrichtung das in der Aufnahmeöffnung angeordnete Werkzeug oder Werkstück aus der Aufnahmeöffnung herausgedrückt, wodurch ein Festklemmen der Werkzeuge oder Werkstücke vermieden und eine Entnahme erleichtert werden kann.

Vorzugsweise ist die konische untere Spannfläche des ersten Spannelements an der Unterseite eines ringsegmentförmigen Spannbereichs des ersten Spannelements angeordnet.

In einer weiteren vorteilhaften Ausgestaltung weist das erste Spannelement eine Vertiefung zur Aufnahme des zweiten Spannelements auf. In der Vertiefung kann das zweite Spannelement verschiebbar geführt sein.

Das zweite Spannelement kann ein plattenförmiges Oberteil und ein blockförmiges Unterteil enthalten. Die konische untere Spannfläche des zweiten Spannelements kann an einem ringsegmentförmigen Spannbereich auf der einen Seite des plattenförmigen Oberteils angeordnet sein. Auf der anderen Seite des plattenförmigen Oberteils kann eine Aussparung zur Aufnahme eines Vorsprungs am ersten Spannelement vorgesehen sein.

Das zweite Spannelement weist zweckmäßigerweise eine seitliche Anschlagfläche zur Anlage an einer inneren Anlagefläche eines am Aufnahmekörper fest angeordneten Seitenteils oder eines anderen gegenüber dem Aufnahmekörper festen Widerlagers auf.

In einer besonders zweckmäßigen Ausführung kann das Betätigungselement zur Verstellung der beiden Spannelemente als Spannschraube mit einem als Rechtsgewinde ausgebildeten ersten Gewinde und einem als Linksgewinde ausgebildeten zweiten Gewinde ausgebildet sein. Durch Drehung des Betätigungselements können so die beiden Spannelemente gleichzeitig zusammen- oder auseinanderbewegt werden. Das Betätigungselement kann aber auch eine Spannschraube mit einem einzelnen Gewinde sein. Die Spannschraube kann dann über das Gewinde in einer entsprechenden Gewindebohrung im ersten Spannelement drehbar angeordnet und z.B. über einen in das zweite Spannelement formschlüssig eingreifenden endseitigen Zapfen drehbar und axial gesichert mit dem zweiten Spannelement verbunden sein.

Die beiden gegeneinander verschiebbaren Spannelemente sind in dem Aufnahmekörper innerhalb eines vorgegebenen Bereichs beweglich, wodurch sich die beiden Spannelemente gegenüber dem Spannteil selbsttätig ausrichten können. Dadurch kann auch bei eventuellen Versetzungen zwischen dem Aufnahmekörper und dem Spannteil möglichst genaue Spannung erreicht werden. Unerwünschte Kippbewegungen oder Schrägstellungen der Spannteile sind außerdem vermeidbar.

Die beiden Spannelemente sind vorzugsweise derart ausgebildet, dass sie einen Spannzapfen eines Spannteils von zwei Seiten umschließen. In einer besonders für angetriebene Werkzeuge geeigneten Ausführung kann das erste Spannelement eine durchgehende Öffnung aufweisen. Dadurch können z.B. auch von unten angetriebene gespannt werden.

Die Aufnahmeöffnung des Aufnahmekörpers kann eine Einheitskontur zur Aufnahme unterschiedlicher Werkzeuge, Werkzeughalter, Werkstücke oder entsprechender Adapter aufweisen. In die Aufnahmeöffnung des Aufnahmekörpers kann auch ein Aufnahmeteil mit einer spezifischen Innenkontur eingesetzt sein. Dadurch kann die Werkzeug- oder Werkstückaufnahme einfach an unterschiedliche Bedürfnisse angepasst werden.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: eine Schnittansicht einer Werkzeug- oder Werkstückaufnahme mit einem Aufnahmekörper und einer im Aufnahmekörper angeordneten Spannvorrichtung in einer Lösestellung;
- **Figur 2**: eine Schnittansicht einer Werkzeug- oder Werkstückaufnahme mit einem Aufnahmekörper und einer im Aufnahmekörper angeordneten Spannvorrichtung in einer Spannstellung;
- **Figur 3**: ein plattenförmiges Aufnahmeteil der in den Figuren 1 und 2 gezeigten Werkzeug- oder Werkstückaufnahme in einer Draufsicht;
- **Figur 4**: ein erstes Spannelement der in Figur 1 gezeigten Werkzeug- oder Werkstückaufnahme in einer Draufsicht;
- **Figur 5**: das erste Spannelement in einer Schnittansicht;
- **Figur 6**: ein zweites Spannelement der in Figur 1 gezeigten Werkzeug- oder Werkstückaufnahme in einer Unteransicht;
- **Figur 7**: das zweite Spannelement in einer Schnittansicht und
- **Figur 8**: ein schraubenförmiges Betätigungselement der in Figur 1 gezeigten Werkzeug- oder Werkstückaufnahme.

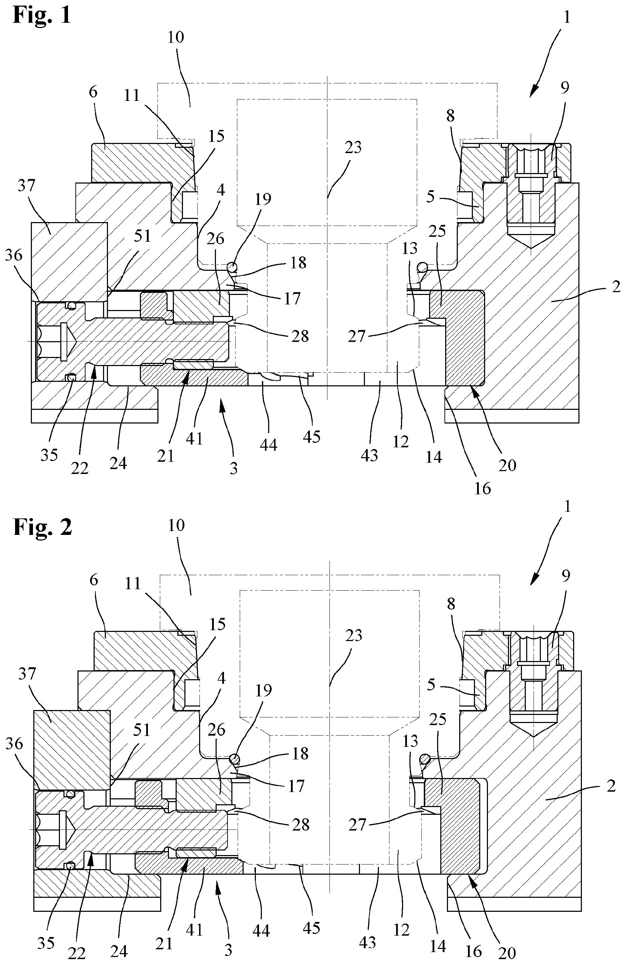

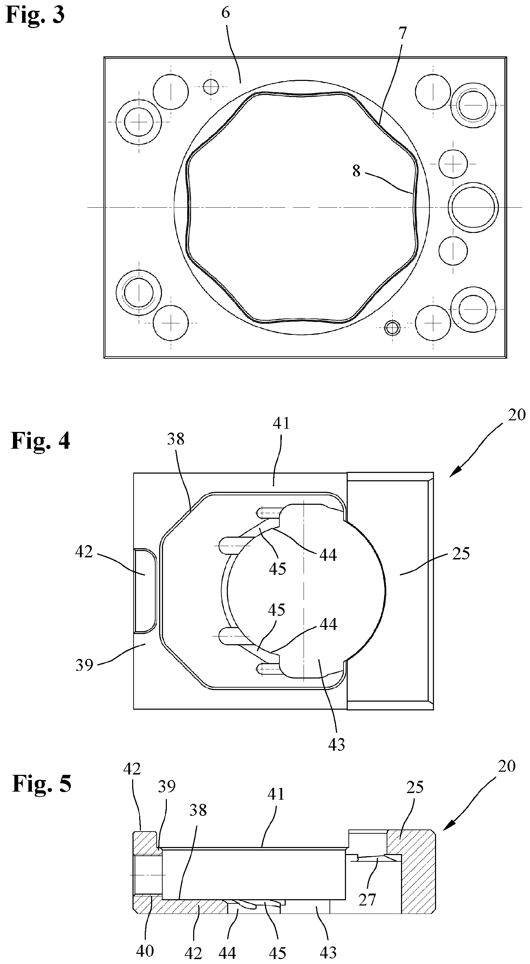

In den Figuren 1 und 2 sind Schnittansichten einer Werkzeug- oder Werkstückaufnahme 1 mit einem Aufnahmekörper 2 und einer im Aufnahmekörper 2 angeordneten Spannvorrichtung 3 zur lösbaren Halterung eines Werkzeugs oder Werkstücks in einer Aufnahmeöffnung 4 des Aufnahmekörpers 2 in einer Lösestellung und einer Spannstellung gezeigt. In der dargestellten Ausführung enthält der Aufnahmekörper 2 an seiner Oberseite ein über einen Ringbund 5 in die Aufnahmeöffnung 4 eingreifendes plattenförmiges Aufnahmeteil 6, das eine z.B. als Hypotrochoid ausgebildete, in Figur 3 erkennbare Innenkontur 7 mit einer inneren Anlagefläche 8 enthält. Selbstverständlich sind auch andere Aufnahmeteile mit anderen Innenkonturen einsetzbar. Über eine als Exzenterschraube ausgebildete Stellschraube 9 kann das in der Aufnahmeöffnung 5 über den Ringbund 5 drehbar angeordnete Aufnahmeteil 6 gegenüber dem Aufnahmekörper 2 leicht gedreht werden. Dadurch kann die Winkellage des Aufnahmeteils 6 justiert werden.

Der Aufnahmekörper 2 mit dem Aufnahmeteil 6 ist zur Aufnahme eines strichpunktiert dargestellten Spannteils 10 mit einer äußeren Anlagefläche 11 und einem unteren Spannzapfen 12 ausgebildet. An dem Spannzapfen 12 sind eine konische obere Fläche 13 und eine konische untere Fläche 14 vorgesehen. Über das z.B. als Werkzeug- oder Werkstückhalter oder unmittelbar als Teil eines Werkzeugs oder Werkstücks ausgeführte Spannteil 10 kann ein Werkzeug oder auch ein Werkstück durch die Spannvorrichtung 3 positionsgenau am Aufnahmekörper 2 fixiert werden. Der Aufnahmekörper 2 ist in der gezeigten Ausführung ein Teil eines Werkzeugrevolvers. Der Werkzeugrevolver kann z.B. als Sternrevolver mit einem scheibenförmigen Aufnahmekörper 2 und mehreren an dessen Außenumfang sternförmig verteilten Aufnahmeöffnungen ausgebildet sein. Der Werkzeugrevolver kann aber auch als Scheibenrevolver mit an der Stirnseite eines Revolverkörpers angeordneten Aufnahmeöffnungen ausgeführt sein oder kann eine andere geeignete Form ausweisen. Der Aufnahmekörper 2 kann außerdem auch ein Werkstücktisch oder eine andere Auflage sein, auf denen ein Werkstück gespannt wird.

Die Aufnahmeöffnung 4 des Aufnahmekörpers 2 weist eine an die Außenkontur des Spannteils 10 angepasste Innenkontur auf. Bei der gezeigten Ausführung ist die Aufnahmeöffnung 4 mehrfach abgestuft und enthält einen erweiterten oberen Bereich 15 zur Aufnahme des Ringbunds 5 am Aufnahmeteil 6 sowie einen unteren Bereich 16 mit einer Abstufung 17 zur Aufnahme des Spannzapfens 12. An dem radialen inneren Ende der Abstufung 17 ist eine Abschrägung 18 zur Anlage eines am Spannteil 10 angeordneten ringförmigen Dämpfungs- oder Dichtelements 19 beim Einsetzen des Spannteils 10 in die Aufnahmeöffnung 4 vorgesehen.

Die Spannvorrichtung 3 umfasst zwei gegeneinander bewegbare Spannelemente 20 und 21, die durch ein gemeinsames Betätigungselement 22 in entgegengesetzten Richtungen quer zu einer Mittelachse 23 der Aufnahmeöffnung 4 verschiebbar und zum beidseitigen Umgreifen des Spannzapfens 12 ausgebildet sind. In der gezeigten Ausführung enthält die Spannvorrichtung 3 ein innerhalb einer entsprechenden Aufnahme 24 des Aufnahmekörpers 2 quer zur Mittelachse 23 der Aufnahmeöffnung 4 verschiebbares erstes schieberförmiges Spannelement 20 und ein gegenüber dem ersten Spannelement 20 verschiebbares zweites schieberförmiges Spannelement 21, die durch Drehung des hier als Spannschraube mit einen Rechts- und Linksgewinde ausgebildeten Betätigungselements 22 zusammen- oder auseinanderbewegt werden können.

Durch Drehung des als Spannschraube ausgebildeten Betätigungselements 22 können die beiden an gegenüberliegenden Seiten des Spannzapfens 12 angreifenden Spannelemente 20 und 21 aus einer in Figur 1 gezeigten Lösestellung in Richtung der Mittelachse 23 aufeinander zu in eine in Figur 2 gezeigte Spannstellung verschoben bzw. aus dieser Spannstellung durch Auseinanderfahren der Spannelemente 20 und 21 wieder in die Lösestellung bewegt werden. Die beiden Spannelemente 20 und 21 weisen einander zugewandte ringsegmentförmige Spannbereiche 25 bzw. 26 mit konischen unteren Spannflächen 27 bzw. 28 zur Anlage an der konischen oberen Fläche 13 des Spannzapfens 12 auf.

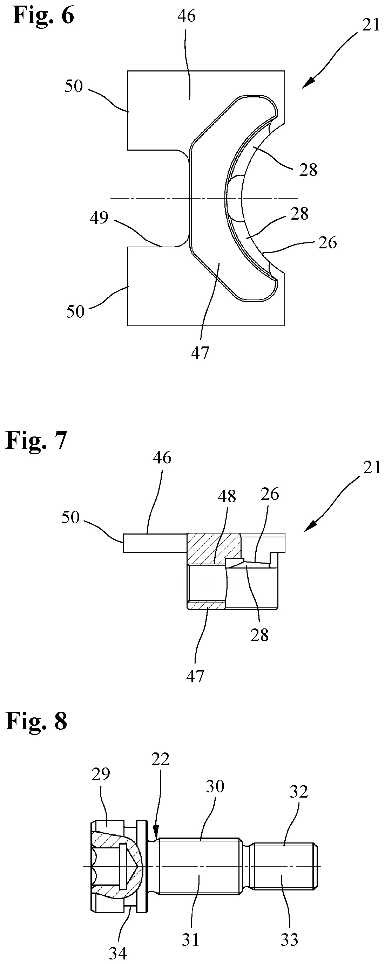

Das in Figur 8 gesondert dargestellte Betätigungselement 22 ist als Spannschraube mit einem zylindrischen Schraubenkopf 29, einem als Linksgewinde ausgeführten ersten Gewinde 30 auf einem hinteren Schaftteil 31 und einem als Rechtsgewinde ausgebildeten zweiten Gewinde 32 auf einem schlankeren vorderen Schaftteil 33 ausgeführt. In dem Schraubenkopf 25 ist eine Ringnut 34 zur Aufnahme eines in Figur 1 erkennbaren elastischen Rings 35 vorgesehen. Über den elastischen Ring 35 ist das schraubenförmige Betätigungselement 22 in einer Bohrung 36 eines mit dem Aufnahmekörper 2 fest verbundenen Seitenteils 37 gegen Herausfallen gesichert aber axial beweglich geführt.

Wie aus den Figuren 4 und 5 hervorgeht, enthält das schieberförmige erste Spannelement 20 einen im Aufnahmekörper 2 auf der einen Seite der Aufnahmeöffnung 4 geführten Teil mit dem ringsegmentförmigen Spannbereich 25 und einen im Aufnahmekörper 2 auf der anderen Seite der Aufnahmeöffnung 4 angeordneten Teil mit einer Vertiefung 38 zur Aufnahme des zweiten Spannelements 21. Die Vertiefung 38 ist zwischen dem ringsegmentförmigen Spannbereich 25 auf der einen Seite des ersten Spannelements 20 und einem Quersteg 39 auf der anderen Seite des ersten Spannelements 20 angeordnet. In dem Quersteg 39 ist eine zu dem zweiten Gewinde 32 des schraubenförmigen Betätigungselements 22 gehörende Gewindebohrung 40 vorgesehen. An der Oberseite weist das erste Spannelement 20 eine nach unten versetzte obere Fläche 41 mit einem Vorsprung 42 am Quersteg 39 auf. In dem ersten Spannelement 20 ist eine in der Draufsicht kreisrunde Öffnung 43 zur Aufnahme des Spannzapfens 12 des Spannteils 10 vorgesehen. In der gezeigten Ausführung ist die Öffnung 43 als Durchgangsöffnung ausgeführt. Dadurch können z.B. auch von unten angetriebene Werkzeuge gespannt werden.

Das erste Spannelement 20 enthält ferner eine Ausdrückeinrichtung, die an der Unterseite des ersten Spannelements 20 angeordnete Ausdrückelemente 44 mit einer konischen oberen Ausdrückfläche 45 zur Anlage an der konischen unteren Fläche 14 des Spannzapfens 12 umfasst. In der gezeigten Ausführung sind die Ausdrückelemente 44 als gegenüber der Öffnung 43 nach innen vorstehende, ringsegmentförmige Ansätze ausgebildet. Durch die Ausdrückeinrichtung kann das Spannteil 10 bei der Bewegung der Spannelemente 20 und 21 in eine Lösestellung aus der Aufnahmeöffnung 4 des Aufnahmeköpers 2 herausgedrückt und somit die Entnahme eines Werkstücks oder Werkzeugs erleichtert werden.

In der Vertiefung 38 des ersten Spannelements 20 ist das in den Figuren 6 und 7 gezeigte zweite Spannelement 21 verschiebbar geführt. Das in Figur 6 in einer Unteransicht gezeigte zweite Spannelement 21 enthält ein plattenförmiges Oberteil 46 und ein blockförmiges Unterteil 47. Das plattenförmige Oberteil 46 ist zur Auflage auf der oberen Fläche 38 und das Unterteil 47 zum Eingriff in die Vertiefung 39 des ersten Spannelements 20 bestimmt. In dem Unterteil 47 ist eine Gewindebohrung 48 zur Aufnahme des ersten Gewindes am Betätigungselements 22 angeordnet. Auf der einen Seite des plattenförmigen Oberteils sind der ringsegmentförmige Spannbereich 26 mit den konischen unteren Spannflächen 28 und auf der anderen Seite eine Aussparung 49 zur Aufnahme des Vorsprungs 42 am ersten Spannelement 20 vorgesehen. An der Seite der Aussparung 49 weist das zweite Spannelement an seinem plattenförmigen Oberteil 46 eine seitliche Anschlagfläche 50 zur Anlage an einer in Figur 1 erkennbaren inneren Anlagefläche 51 des am Aufnahmekörper 2 fest angeordneten Seitenteils 37 auf.

Wie aus den Figuren 1 und 2 hervorgeht, sind die beiden Spannelemente 20 und 21 derart ausgebildet, dass sie den Spannzapfen 12 des Spannteils 10 von beiden Seiten umschließen. Die beiden diametral gegenüberliegenden Spannbereiche 25 und 26 sind als Ringsegmente ausgeführt. Dadurch ist eine gute Spann- und Einzugskraft erreichbar.

Durch Drehung des hier als Spannschraube ausgebildeten Betätigungselements 22 können die Spannelemente 20 und 21 zwischen der in Figur 1 gezeigten Lösestellung und der in den Figur 2 gezeigten Spannstellung verschoben. Wird z.B. das Betätigungselement 22 in der Lösestellung von 2 nach rechts gedreht, werden die beiden Spannelemente 20 und 21 über das schraubenförmige Betätigungselement 22 zusammengefahren und gegen den Spannzapfen 12 des Spannteils 10 gezogen. Dabei wird das Spannteil 10 in die Aufnahmeöffnung 4 eingezogen. Selbst wenn die beiden Spannelemente 20 nicht zentriert zum Spannteil 10 sind, können sich die Spannelemente 20 und 21 durch die axiale Bewegungsmöglichkeit des Betätigungselements 12 ausrichten, so dass unerwünschte Kippbewegungen oder Schrägstellungen der Werkzeuge oder Werkstücke vermieden werden. In der Spannstellung weisen die beiden Spannelemente 20 und 21 keine Abstützung an dem Aufnahmekörper 2 auf, wodurch die Entstehung von Kippmomenten vermieden werden kann.

Wird das schraubenförmige Betätigungselement 22 dagegen bei der in Figur 2 gezeigten Spannstellung nach links gedreht, fahren die beiden Spannelemente 20 und 21 auseinander, bis das zweite Spannelement 21 mit seiner Anschlagfläche 50 zur Anlage an der gegenüber dem Aufnahmekörper 2 festen Anlagefläche 51 gelangt. Durch weitere Drehung des Betätigungselements 22 in die Löserichtung verfährt dann das erste Spannelement 20 mit seiner Ausdrückfläche 45 unter den Spannzapfen 12, so dass das Spannteil 10 aus der Aufnahmeöffnung 4 gedrückt wird. Durch das Verfahren der beiden Spannelemente 20 und 21 kann das Spannteil 10 also nicht nur in die Aufnahmeöffnung 4 eingezogen, sondern aus dieser auch wieder herausgedrückt werden.

### Bezugszeichenliste

- 1: Werkzeug- oder Werkstückaufnahme
- 2: Aufnahmekörper
- 3: Spannvorrichtung
- 4: Aufnahmeöffnung
- 5: Ringbund
- 6: Aufnahmeteil
- 7: Innenkontur
- 8: Innere Anlagefläche
- 9: Stellschraube
- 10: Spannteil
- 11: Äußere Anlagefläche
- 12: Spannzapfen
- 13: Konische obere Fläche
- 14: Konische untere Fläche
- 15: Oberer Bereich
- 16: Unterer Bereich
- 17: Abstufung
- 18: Abschrägung
- 19: Dämpfungs- oder Dichtelement
- 20: Erstes Spannelement
- 21: Zweites Spannelement
- 22: Betätigungselement
- 23: Mittelachse
- 24: Aufnahme
- 25: Spannbereich
- 26: Spannbereich
- 27: Spannfläche
- 28: Spannfläche
- 29: Schraubenkopf
- 30: Erstes Gewinde
- 31: Hinterer Schaftteil
- 32: Zweites Gewinde
- 33: Vorderer Schaftteil
- 34: Ringnut
- 35: Ring
- 36: Bohrung
- 37: Seitenteil
- 38: Vertiefung
- 39: Quersteg
- 40: Gewindebohrung
- 41: Obere Fläche
- 42: Vorsprung
- 43: Öffnung
- 44: Ausdrückelement
- 45: Ausdrückfläche
- 46: Oberteil
- 47: Unterteil
- 48: Gewindebohrung
- 49: Aussparung
- 50: Anschlagfläche
- 51: Anlagefläche

## Patentansprüche

1. Werkzeug- oder Werkstückaufnahme (1) mit einem Aufnahmekörper (2) und einer Spannvorrichtung (3) zum Spannen eines Werkzeugs oder eines Werkstücks in einer Aufnahmeöffnung (4) des Aufnahmekörpers (2), wobei die Spannvorrichtung (3) ein in einer Aufnahme (24) des Aufnahmekörpers (2) quer zu einer Mittelachse (23) der Aufnahmeöffnung (4) verschiebbares erstes Spannelement (20) und ein mittels eines Bedienelements (22) gegenüber dem ersten Spannelement (10) quer zur Mittelachse (23) der Aufnahmeöffnung (4) verschiebbares zweites Spannelement (21) mit konischen unteren Spannflächen (27, 28) an den beiden Spannelementen (20, 21) zum Einziehen des Werkzeugs oder Werkstücks in die Aufnahmeöffnung (4) umfasst und wobei an dem ersten Spannelement (20) eine Ausdrückeinrichtung (44, 45) zum Ausdrücken des Werkzeugs oder Werkstücks aus der Aufnahmeöffnung (4) bei der Bewegung der Spannelemente (20, 21) in eine Lösestellung angeordnet ist und die Ausdrückeinrichtung (44, 45) an der Unterseite des ersten Spannelements (20) angeordnete Ausdrückelemente (44) mit einer konischen oberen Ausdrückfläche (45) umfasst, **dadurch gekennzeichnet, dass** die konische untere Spannfläche (27) des ersten Spannelements (20) auf der einen Seite einer Öffnung (43) im ersten Spannelement (20) und die Ausdrückelemente (44) auf der gegenüberliegenden anderen Seite der Öffnung (43) am ersten Spannelement (20) angeordnet sind.

2. Werkzeug- oder Werkstückaufnahme (1) nach Anspruch 1, **dadurch gekennzeichnet, dass** die Ausdrückelemente (44) als gegenüber der Öffnung (43) nach innen vorstehende ringsegmentförmige Ansätze ausgebildet sind.

3. Werkzeug- oder Werkstückaufnahme (1) nach Anspruch 1 oder 2, **dadurch gekennzeichnet, dass** die konische untere Spannfläche (27) des ersten Spannelements (20) an der Unterseite eines ringsegmentförmigen Spannbereichs (25) des ersten Spannelements (20) angeordnet ist.

4. Werkzeug- oder Werkstückaufnahme (1) nach einem der Ansprüche 1 bis 3, **dadurch gekennzeichnet, dass** das erste Spannelement (20) eine Vertiefung (38) zur Aufnahme des zweiten Spannelements (21) enthält.

5. Werkzeug- oder Werkstückaufnahme (1) nach einem der Ansprüche 1 bis 4, **dadurch gekennzeichnet, dass** das zweite Spannelement (21) ein plattenförmiges Oberteil (46) und ein blockförmiges Unterteil (47) enthält.

6. Werkzeug- oder Werkstückaufnahme (1) nach Anspruch 5, **dadurch gekennzeichnet, dass** die konische untere Spannfläche (28) des zweiten Spannelements (21) an einem ringsegmentförmigen Spannbereich (26) auf der einen Seite des plattenförmigen Oberteils (46) angeordnet ist.

7. Werkzeug- oder Werkstückaufnahme (1) nach Anspruch 6, **dadurch gekennzeichnet, dass** auf der anderen Seite des plattenförmigen Oberteils (46) eine Aussparung (49) zur Aufnahme eines Vorsprungs (42) am ersten Spannelement (20) vorgesehen ist.

8. Werkzeug- oder Werkstückaufnahme (1) nach einem der Ansprüche 1 bis 7, **dadurch gekennzeichnet, dass** das zweite Spannelement (21) eine seitliche Anschlagfläche (50) zur Anlage an einer inneren Anlagefläche (51) eines am Aufnahmekörper (2) fest angeordneten Seitenteils (37) enthält.

9. Werkzeug- oder Werkstückaufnahme (1) nach einem der Ansprüche 1 bis 8, **dadurch gekennzeichnet, dass** das Betätigungselement (22) als Spannschraube mit einem als Linksgewinde ausgebildeten ersten Gewinde (30) und einem als Rechtsgewinde ausgebildeten zweiten Gewinde (32) ausgebildet ist.

10. Werkzeug- oder Werkstückaufnahme (1) nach einem der Ansprüche 1 bis 9, **dadurch gekennzeichnet, dass** in dem ersten Spannelement (20) eine Gewindebohrung (40) für das Befestigungselement (22) vorgesehen ist.

11. Werkzeug- oder Werkstückaufnahme (1) nach Anspruch 10, **dadurch gekennzeichnet, dass** in dem zweiten Spannelement (21) eine Gewindebohrung (48) für das Befestigungselement (22) vorgesehen ist.

12. Werkzeug- oder Werkstückaufnahme (1) nach einem der Ansprüche 1 bis 11, **dadurch gekennzeichnet, dass** die beiden Spannelemente (20, 21) derart ausgebildet sind, dass sie einen Spannzapfen (12) eines Spannteils (10) von zwei Seiten umschließen.

## Claims

1. Tool or workpiece receptacle (1) with a receiving body (2) and a clamping device (3) for clamping a tool or a workpiece in a receiving opening (4) of the receiving body (2), wherein the clamping device (3) comprises a first clamping element (20) displaceable in a receptacle (24) of the receiving body (2) transversely to a central axis (23) of the receiving opening (4) and a second clamping element (21) displaceable by means of an operating element (22) relative to the first clamping element (10) transversely to the central axis (23) of the receiving opening (4) and having conical lower clamping surfaces (27, 28) on the two clamping elements (20, 21) for drawing the tool or workpiece into the receiving opening (4) and wherein an ejection device (44, 45) is arranged on the first clamping element (20) for ejecting the tool or workpiece from the receiving opening (4) when the clamping elements (20, 21) are moved into a release position, and the ejection device (44, 45) comprises ejection elements (44) arranged on the underside of the first clamping element (20) and having a conical upper ejection surface (45), **characterized in that** the conical lower clamping surface (27) of the first clamping element (20) is arranged on one side of an opening (43) in the first clamping element (20) and the ejection elements (44) are arranged on the first clamping element (20) on the opposite other side of the opening (43).

2. Tool or workpiece receptacle (1) according to claim 1, **characterized in that** the ejection elements (44) are designed as annular segment-shaped projections projecting inwards with respect to the opening (43).

3. Tool or workpiece receptacle (1) according to claim 1 or 2, **characterized in that** the conical lower clamping surface (27) of the first clamping element (20) is arranged on the underside of an annular segment-shaped clamping area (25) of the first clamping element (20).

4. Tool or workpiece receptacle (1) according to one of claims 1 to 3, **characterized in that** the first clamping element (20) contains a cavity (38) for receiving the second clamping element (21).

5. Tool or workpiece receptacle (1) according to one of claims 1 to 4, **characterized in that** the second clamping element (21) comprises a plate-shaped upper part (46) and a block-shaped lower part (47).

6. Tool or workpiece receptacle (1) according to claim 5, **characterized in that** the conical lower clamping surface (28) of the second clamping element (21) is arranged on an annular segment-shaped clamping area (26) on one side of the plate-shaped upper part (46).

7. Tool or workpiece receptacle (1) according to claim 6, **characterized in that** a recess (49) is provided on the other side of the plate-shaped upper part (46) for receiving a protrusion (42) on the first clamping element (20).

8. Tool or workpiece receptacle (1) according to one of claims 1 to 7, **characterized in that** the second clamping element (21) contains a lateral abutment surface (50) for bearing against an inner bearing surface (51) of a side part (37) fixedly arranged on the receiving body (2).

9. Tool or workpiece receptacle (1) according to one of claims 1 to 8, **characterized in that** the actuating element (22) is designed as a clamping screw with a first thread (30) designed as a left-hand thread and a second thread (32) designed as a right-hand thread.

10. Tool or workpiece receptacle (1) according to one of claims 1 to 9, **characterized in that** a threaded bore (40) for the fastening element (22) is provided in the first clamping element (20).

11. Tool or workpiece receptacle (1) according to claim 10, **characterized in that** a threaded bore (48) for the fastening element (22) is provided in the second clamping element (21).

12. Tool or workpiece receptacle (1) according to one of claims 1 to 11, **characterized in that** the two clamping elements (20, 21) are designed in such a way that they enclose a clamping pin (12) of a clamping part (10) from two sides.

## Revendications

1. Logement pour outil ou pièce à usiner (1) avec un corps de logement (2) et un dispositif de serrage (3) pour le serrage d'un outil ou d'une pièce à usiner dans une ouverture de logement (4) du corps de logement (2), dans lequel le dispositif de serrage (3) comprend un premier élément de serrage (20) pouvant être coulissé transversalement à un axe central (23) de l'ouverture de logement (4) dans un logement (24) du corps de logement (2) et un second élément de serrage (21) pouvant être coulissé transversalement à l'axe central (23) de l'ouverture de logement (4) par rapport au premier élément de serrage (10) au moyen d'un élément de commande (22) avec des surfaces de serrage (27, 28) inférieures coniques au niveau des deux éléments de serrage (20, 21) pour l'insertion de l'outil ou de la pièce à usiner jusque dans l'ouverture de logement (4) et dans lequel un équipement de sortie en poussant (44, 45) pour faire sortir en poussant l'outil ou la pièce à usiner hors de l'ouverture de logement (4) lors du mouvement des éléments de serrage (20, 21) jusque dans une position de libération est agencé au niveau du premier élément de serrage (20) et l'équipement de sortie en poussant (44, 45) comprend des éléments de sortie en poussant (44) agencés contre le côté inférieur du premier élément de serrage (20) avec une surface de sortie en poussant (45) supérieure conique, **caractérisé en ce que** la surface de serrage (27) inférieure conique du premier élément de serrage (20) est agencée sur le un côté d'une ouverture (43) dans le premier élément de serrage (20) et les éléments de sortie en poussant (44) sont agencés sur l'autre côté opposé de l'ouverture (43) contre le premier élément de serrage (20).

2. Logement pour outil ou pièce à usiner (1) selon la revendication 1, **caractérisé en ce que** les éléments de sortie en poussant (44) sont conçus en tant qu'épaulements en forme de segment annulaire faisant saillie vers l'intérieur par rapport à l'ouverture (43).

3. Logement pour outil ou pièce à usiner (1) selon la revendication 1 ou 2, **caractérisé en ce que** la surface de serrage (27) inférieure conique du premier élément de serrage (20) est agencée contre le côté inférieur d'une zone de serrage (25) en forme de segment annulaire du premier élément de serrage (20).

4. Logement pour outil ou pièce à usiner (1) selon l'une des revendications 1 à 3, **caractérisé en ce que** le premier élément de serrage (20) contient un renfoncement (38) pour le logement du second élément de serrage (21).

5. Logement pour outil ou pièce à usiner (1) selon l'une des revendications 1 à 4, **caractérisé en ce que** le second élément de serrage (21) contient une partie supérieure (46) en forme de plaque et une partie inférieure (47) en forme de bloc.

6. Logement pour outil ou pièce à usiner (1) selon la revendication 5, **caractérisé en ce que** la surface de serrage (28) inférieure conique du second élément de serrage (21) est agencée contre une zone de serrage (26) en forme de segment annulaire sur le un côté de la partie supérieure (46) en forme de plaque.

7. Logement pour outil ou pièce à usiner (1) selon la revendication 6, **caractérisé en ce que** sur l'autre côté de la partie supérieure (46) en forme de plaque est prévu un évidement (49) pour le logement d'une saillie (42) contre le premier élément de serrage (20).

8. Logement pour outil ou pièce à usiner (1) selon l'une des revendications 1 à 7, **caractérisé en ce que** le second élément de serrage (21) contient une surface de butée (50) latérale pour une application contre une surface d'application (51) intérieure d'une partie latérale (37) agencée contre le corps de logement (2).

9. Logement pour outil ou pièce à usiner (1) selon l'une des revendications 1 à 8, **caractérisé en ce que** l'élément d'actionnement (22) est conçu en tant que vis de serrage avec un premier filetage (30) conçu en tant que filetage à gauche et un second filetage (32) conçu en tant que filetage à droite.

10. Logement pour outil ou pièce à usiner (1) selon l'une des revendications 1 à 9, **caractérisé en ce qu'**un alésage fileté (40) est prévu dans le premier élément de serrage (20) pour l'élément de fixation (22).

11. Logement pour outil ou pièce à usiner (1) selon la revendication 10, **caractérisé en ce qu'**un alésage fileté (48) est prévu dans le second élément de serrage (21) pour l'élément de fixation (22).

12. Logement pour outil ou pièce à usiner (1) selon l'une des revendications 1 à 11, **caractérisé en ce que** les deux éléments de serrage (20, 21) sont conçus de sorte qu'ils entourent depuis deux côtés un tenon de serrage (12) d'une partie de serrage (10).
